# EUROPEAN PATENT APPLICATION

(11) **EP 4 787 122 A1**
(43) Date of publication of application: **05.08.2026**
(21) Application number: 24870469.4
(22) Date of filing: 12.09.2024
(51) Int. Cl.: G06F 3/01, G06F 3/16, B60K 35/10, B60K 35/22, G10L 15/22

(54) **MULTI-MODAL INTERACTION METHOD AND APPARATUS, CONTROLLER, SYSTEM, AUTOMOBILE, AND STORAGE MEDIUM**

(30) Priority: 28.09.2023 CN 202311294515
(71) Applicant: BYD Company Limited, Shenzhen, Guangdong 518118 (CN)
(72) Inventor: DENG, Junhui, Shenzhen, Guangdong 518118 (CN); YANG, Dongsheng, Shenzhen, Guangdong 518118 (CN); LIU, Ke, Shenzhen, Guangdong 518118 (CN); SHEN, Zhong, Shenzhen, Guangdong 518118 (CN); ZHANG, Youliang, Shenzhen, Guangdong 518118 (CN)
(74) Representative: Mathys & Squire
(86) International application number: PCT/CN2024/118597
(87) International publication number: WO 2025/066925

(57) **Abstract**

This application provides a multimodal interaction method and apparatus, a controller, a system, an automobile, and a storage medium. The method includes: determining a current interaction script based on a current interaction voice at interaction time; determining, based on a current interaction interface corresponding to the interaction time, a current scene image and current scene data that are corresponding to the current interaction interface; performing multimodal recognition on the current interaction script, the current scene image, and the current scene data by using a multimodal recognition model to determine a target control instruction; and executing the target control instruction to complete a human-machine interaction operation. According to the method, output efficiency and accuracy of the target control instruction can be guaranteed, and complex control logic such as customized templates, rules, and associations during development can be reduced, thereby improving adaptability and generalization capabilities of voice interaction.

## Description

This application claims priority to Chinese Patent Application No. 202311294515.2, filed with the China National Intellectual Property Administration on September 28, 2023 and entitled "MULTIMODAL INTERACTION METHOD AND APPARATUS, CONTROLLER, SYSTEM, AUTOMOBILE, AND STORAGE MEDIUM", which is incorporated herein by reference in its entirety.

### TECHNICAL FIELD

This application relates to the field of human-machine interaction technologies, and in particular, to a multimodal interaction method and apparatus, a controller, a system, an automobile, and a storage medium.

### BACKGROUND

With popularization and development of automobile technologies, voice interaction has become a mainstream approach for in-vehicle infotainment systems to implement human-machine interaction. Vehicle owners can perform operations by reading text and buttons on screens of the in-vehicle infotainment systems instead of using fingers. In related technologies, natural language processing (NLP) is mainly performed on a current interaction voice acquired, supplemented by a large quantity of rules and templates, and the interaction instruction is determined through template matching. However, in this implementation, interaction efficiency and accuracy are relatively low.

### SUMMARY

Embodiments of this application provide a multimodal interaction method and apparatus, a controller, a system, a vehicle, and a storage medium to resolve problems of low efficiency and low accuracy of existing voice interaction.

A multimodal interaction method, including:
determining a current interaction script based on a current interaction voice at interaction time;
determining, based on a current interaction interface corresponding to the interaction time, a current scene image and current scene data that are corresponding to the current interaction interface;
performing multimodal recognition on the current interaction script, the current scene image, and the current scene data by using a multimodal recognition model to determine a target control instruction; and
executing the target control instruction to complete a human-machine interaction operation.

Preferably, performing multimodal recognition on the current interaction script, the current scene image, and the current scene data by using the multimodal recognition model to determine the target control instruction includes:
determining a multimodal fusion feature based on the current interaction script, the current scene image, and the current scene data; and
performing intent recognition on the multimodal fusion feature by using an intent classification model to determine the target control instruction.

Preferably, the current scene data includes current scene text and current scene code;
performing feature fusion on the current interaction script, the current scene image, and the current scene data to obtain the multimodal fusion feature includes:
obtaining a first fusion feature based on the current interaction script, the current scene image, and the current scene text, wherein the first fusion feature includes location information of a required interface operation element; and
obtaining a second fusion feature based on the current interaction script and the current scene code, wherein the second fusion feature includes code information of a required interface operation element; and
the multimodal fusion feature includes the first fusion feature and the second fusion feature.

Preferably, the current scene text includes region block names and region block coordinates corresponding to all current interface elements;
obtaining the first fusion feature based on the current interaction script, the current scene image, and the current scene text includes:
matching the current interaction script with region block names corresponding to all current interface elements to determine a first matching degree corresponding to each current interface element;
determining the current interface element as a required interface operation element if the first matching degree corresponding to the current interface element is greater than a first matching threshold, to obtain region block coordinates corresponding to the required interface operation element; and
performing coordinate regression processing on the region block coordinates corresponding to the required interface operation element and the current scene image to determine the first fusion feature.

Preferably, the current scene code includes code function annotations corresponding to all current interface elements and scene code corresponding to the code function annotations;
determining the second fusion feature based on the current interaction script and the current scene code includes:
matching the current interaction script with all code function annotations corresponding to the current scene code to determine a second matching degree corresponding to each of the code function annotations; and
determining scene code with the second matching degree greater than a second matching threshold as the second fusion feature.

Preferably, performing intent recognition on the multimodal fusion feature by using the intent classification model to determine the target control instruction includes:
performing intent recognition on the multimodal fusion feature by using the intent classification model to determine at least one pending control instruction corresponding to the required interface operation element and a recognition score corresponding to the pending control instruction; and
determining the pending control instruction having a maximum recognition score as a target control instruction.

Preferably, performing feature fusion on the current interaction script, the current scene image, and the current scene data to obtain the multimodal fusion feature includes:
performing format conversion on the current interaction script, the current scene image, and the current scene data to respectively obtain a standard interaction script, a standard scene image, and standard scene data; and
performing feature fusion on the standard interaction script, the standard scene image, and the standard scene data to obtain a multimodal fusion feature.

A multimodal interaction apparatus, including:
a current interaction script determination module, configured to determine a current interaction script based on a current interaction voice at interaction time;
a current scene information determination module, configured to determine, based on a current interaction interface corresponding to the interaction time, a current scene image and current scene data that are corresponding to the current interaction interface;
a target control instruction determination module, configured to perform multimodal recognition on the current interaction script, the current scene image, and the current scene data by using a multimodal recognition model to determine a target control instruction; and
a target control instruction execution module, configured to execute the target control instruction to complete a human-machine interaction operation.

Preferably, the target control instruction determination module includes:
a multimodal fusion feature determination submodule, configured to determine a multimodal fusion feature based on the current interaction script, the current scene image, and the current scene data; and
a target control instruction determination submodule, configured to perform intent recognition on the multimodal fusion feature by using an intent classification model to determine the target control instruction.

Preferably, the current scene data includes current scene text and current scene code;
the multimodal fusion feature determination submodule includes:
a first fusion feature determination unit, configured to obtain a first fusion feature based on the current interaction script, the current scene image, and the current scene text, wherein the first fusion feature includes location information of a required interface operation element; and
a second fusion feature determination unit, configured to obtain a second fusion feature based on the current interaction script and the current scene code, wherein the second fusion feature includes code information of a required interface operation element; and
the multimodal fusion feature includes the first fusion feature and the second fusion feature.

Preferably, the current scene text includes region block names and region block coordinates corresponding to all current interface elements;
the first fusion feature determination unit includes:
a first matching degree determination subunit, configured to match the current interaction script with region block names corresponding to all current interface elements to determine a first matching degree corresponding to each current interface element;
a region block coordinate determination subunit, configured to determine the current interface element as a required interface operation element if the first matching degree corresponding to the current interface element is greater than a first matching threshold, to obtain region block coordinates corresponding to the required interface operation element; and
a coordinate regression processing subunit, configured to perform coordinate regression processing on the region block coordinates corresponding to the required interface operation element and the current scene image to determine the first fusion feature.

Preferably, the current scene code includes code function annotations corresponding to all current interface elements and scene code corresponding to the code function annotations;
the second fusion feature determination unit includes:
a second matching degree determination subunit, configured to match the current interaction script with all code function annotations corresponding to the current scene code to determine a second matching degree corresponding to each of the code function annotations; and
a second fusion feature determination subunit, configured to determine scene code with the second matching degree greater than a second matching threshold as the second fusion feature.

Preferably, the target control instruction determination submodule includes:
a pending control instruction determination unit, configured to perform intent recognition on the multimodal fusion feature by using the intent classification model to determine at least one pending control instruction corresponding to the required interface operation element and a recognition score corresponding to the pending control instruction; and
a target control instruction determination unit, configured to determine the pending control instruction having a maximum recognition score as a target control instruction.

Preferably, the multimodal fusion feature determination submodule includes:
a format conversion unit, configured to perform format conversion on the current interaction script, the current scene image, and the current scene data to respectively obtain a standard interaction script, a standard scene image, and standard scene data; and
a feature fusion unit, configured to perform feature fusion on the standard interaction script, the standard scene image, and the standard scene data to obtain a multimodal fusion feature.

An on-board controller, including a memory, a processor, and computer-readable instructions stored in the memory and capable of running on the processor, wherein when the processor executes the computer-readable instructions, the multimodal interaction method is implemented.

An in-vehicle infotainment system, including the on-board controller, a voice acquisition device connected to the on-board controller, and a display, wherein the voice acquisition device is configured to send a current interaction voice acquired to the on-board controller, and the display is configured to display a current scene image.

An automobile, including the in-vehicle infotainment system.

A computer-readable storage medium, wherein the computer-readable storage medium stores computer-readable instructions, and when the computer-readable instructions are executed by a processor, the multimodal interaction method is implemented.

According to the multimodal interaction method and apparatus, the controller, the system, the automobile, and the storage medium, multimodal data (such as the current interaction script, the current scene image, and the current scene data that are corresponding to the same interaction time) capable of reflecting a human-machine interaction process performed by a user is first obtained, and the multimodal data may be input into a pre-trained multimodal recognition model to directly output a required target control instruction, which helps guarantee output efficiency and accuracy of the target control instruction. In addition, complex control logic such as customized templates, rules, and associations during development can be reduced, thereby improving adaptability and generalization capabilities of voice interaction.

### BRIEF DESCRIPTION OF DRAWINGS

To describe the technical solutions in embodiments of this application more clearly, the following briefly describes the accompanying drawings used in description of the embodiments of this application. Apparently, the accompanying drawings in the following description show merely some embodiments of this application, and a person of ordinary skill in the art may still derive other drawings from the accompanying drawings without creative efforts.
FIG. 1 is a schematic diagram of an application environment for a multimodal interaction method according to an embodiment of this application;
FIG. 2 is a flowchart of a multimodal interaction method according to an embodiment of this application;
FIG. 3 is another flowchart of a multimodal interaction method according to an embodiment of this application;
FIG. 4 is another flowchart of a multimodal interaction method according to an embodiment of this application;
FIG. 5 is another flowchart of a multimodal interaction method according to an embodiment of this application;
FIG. 6 is another flowchart of a multimodal interaction method according to an embodiment of this application;
FIG. 7 is another flowchart of a multimodal interaction method according to an embodiment of this application; and
FIG. 8 is a schematic block diagram of a multimodal interaction apparatus according to an embodiment of this application.

### DESCRIPTION OF EMBODIMENTS

The following clearly and completely describes the technical solutions in embodiments of this application with reference to the accompanying drawings in the embodiments of this application. Apparently, the described embodiments are some rather than all embodiments of this application. Based on the embodiments of this application, all other embodiments obtained by a person of ordinary skill in the art without creative efforts will fall within the protection scope of this application.

An embodiment of this application provides a multimodal interaction method. The multimodal interaction method may be applied to an in-vehicle infotainment system, and the in-vehicle infotainment system includes an on-board controller, a voice acquisition device in communication connection with the on-board controller, and a display. The on-board controller is a controller disposed on an automobile, and may be a controller dedicated to implementing multimodal interaction, or may be a controller integrated with a multimodal interaction function and other functions. The voice acquisition device is a device configured to acquire interaction voices, and may be but is not limited to a microphone. The display is a device configured to display an interaction interface. The display may be a touch display, and may not only display a human-machine interaction interface, but may also receive a control instruction generated by a touch operation of a user on the human-machine interaction interface, and perform a corresponding control operation based on the control instruction.

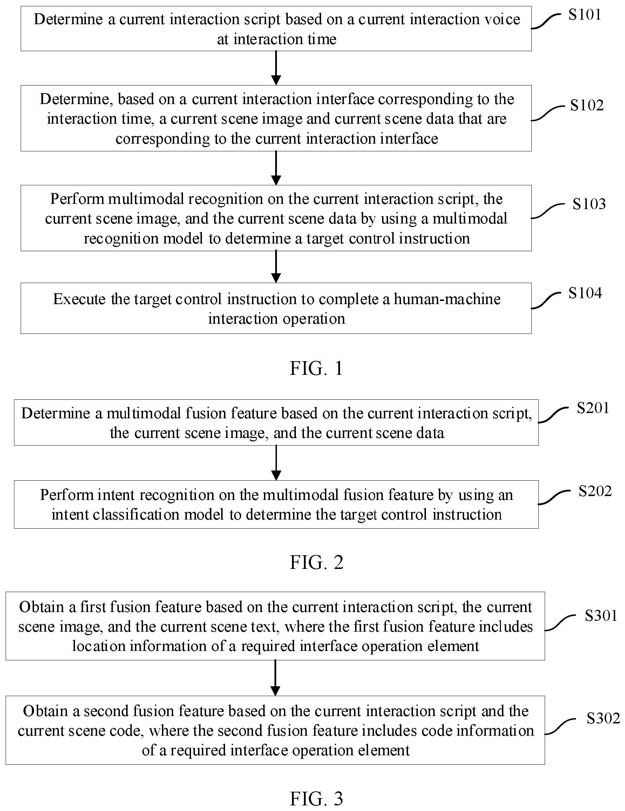

In one embodiment, as shown in FIG. 1, a multimodal interaction method is provided. For example, the method is applied to the on-board controller of the in-vehicle infotainment system, and the method includes the following steps.

S101: determine a current interaction script based on a current interaction voice at interaction time.

S102: determine, based on a current interaction interface corresponding to the interaction time, a current scene image and current scene data that are corresponding to the current interaction interface.

S103: perform multimodal recognition on the current interaction script, the current scene image, and the current scene data by using a multimodal recognition model to determine a target control instruction.

S104: execute the target control instruction to complete a human-machine interaction operation.

The current interaction voice is a voice that is acquired in real time and used to implement human-machine interaction. The current interaction script is a user script determined to perform voice recognition on the current interaction voice. The interaction time is time when the current interaction voice is acquired.

In one embodiment, in step S101, the on-board controller may receive the current interaction voice at the interaction time acquired by the voice acquisition device (including but not limited to a microphone) disposed in the automobile. The current interaction voice will be understood as a voice acquired by a user to utter a control intent in a voice-based approach. After receiving the current interaction voice, the on-board controller may perform voice recognition on the current interaction voice by using a preset voice recognition tool, for example, recognize the current interaction voice by using an ASR tool, to obtain the current interaction script in the form of text.

The current interaction interface is an interaction interface displayed on the display of the in-vehicle infotainment system at current time. The current scene image is an interface image corresponding to the current interaction interface. At least one current interface element is displayed on the interface image. The current interface element is an interface element displayed in the current scene image. The interface element herein will be understood as a control configured to implement human-machine interaction, for example, an input box, a key, a scroll bar, or a drop-down box displayed on the current interaction interface. The current scene data is a tree structure corresponding to the current interaction interface. The tree structure includes nodes corresponding to the current interface element, and each node includes scene text, a scene location, a node type, and other data.

As an example, in step 102, after receiving the current interaction voice, the on-board controller may determine, based on interaction time determined by the current interaction voice, an interaction interface corresponding to the interaction time as the current interaction interface, that is, the current interaction interface will be understood as an interaction interface on which the user utters the current interaction voice. Then, the current scene image and the current scene data that are corresponding to the current interaction interface are obtained by using a preset interface. For example, the current scene image corresponding to the current interaction interface may be read by using a preset API interface, and the current scene data corresponding to the current interaction interface may be read by using a preset system service interface.

The multimodal recognition model is a model used to implement recognition processing on multimodal data to determine a control instruction for the multimodal data. The multimodal data herein is data collected by using different methods or from different perspectives for a thing to be described, such as image data and text data that represent the same thing.

As an example, the multimodal recognition model is a recognition model determined by performing model training by using multimodal training samples in advance, and the multimodal training samples include multimodal training data and training control instructions corresponding to the multimodal training data. The multimodal training data includes training interaction scripts, training scene images, and training scene data. The training interaction scripts herein are scripts determined by recognizing interaction voices during the model training; the training scene images are scene images corresponding to interaction interfaces determined during the model training; the training scene data is scene data corresponding to the interaction interfaces determined during the model training; and the training control instructions are control instructions that match the training interaction scripts, the training scene images, and the training scene data. In this example, the training interaction scripts, the training scene images, the training scene data, and the training control instructions are used as multimodal training samples and input into a preset neural network model for model training, so that the multimodal recognition model obtained from training may output a corresponding control instruction based on input multimodal data (including but not limited to an interaction script, a scene image, and scene data).

For example, the multimodal training samples are as follows: query: training interaction script; sceneData: training scene data; Image: training scene image; Target: training control instruction; and query: adjust multimedia brightness to 60%. Specific examples are as follows.

| Example 1 |
|---|
| query |
| Adjust multimedia brightness to 60% |
| sceneData |
| position: multimedia brightness adjustment\|rect[624,278,414,237]-seekBar\|rect[308,414,338,1073] |
| type:TextView-SeekBar |
| slide:false-true |
| id:209-211 |
| ... |
| Image |
| rgb:[255,128,147,98,...] |
| target |
| rect:[308,414,338,1073]\|id:211\|action:setValue\|value:60% |

| Example 2 |
|---|
| query |
| Set multimedia screensaver to clock 1 |
| sceneData |
| position: multimedia screensaver\|rect[428,414,469,564]-clock 1\|rect[496,580,550,743] |
| type:TextView-RadioButton |
| click:false-true |
| id:215-216 |
| ... |
| Image |
| rgb:[255,128,147,98,...] |
| target |
| rect:[496,580,550,743]\|id:216\|action:click |

As an example, in step S103, the on-board controller may input multimodal data such as the current interaction script, the current scene image, and the current scene data into the pre-trained multimodal recognition model to quickly obtain an output target control instruction. Compared with a conventional approach of simply using a current interaction script to locate scene information of a current interaction interface, the approach of using the current interaction script combined with the current scene image and the current scene data allows a focused interface element that needs to be manipulated by a user to be quickly and accurately located to output a target control instruction corresponding to the focused interface element, which helps guarantee output efficiency and accuracy of the target control instruction. Compared with a conventional conversion control process that needs a large quantity of rules and templates, multimodal data such as the current interaction script, the current scene image, and the current scene data may be recognized by using a pre-trained multimodal recognition model to directly output a required target control instruction, which reduces complex control logic such as customized templates, rules, and associations during development, and helps improve adaptability and generalization capabilities of voice interaction.

In this example, the determined target control instruction includes: a control type, a control location, a control ID, text, and an action. The action herein includes but is not limited to an action such as tap, long-press, set a value, set sliding, or set text. For example, in the target control instruction "rect:[308,414,338,1073]|id:211|action:setValue|value:60%", the control location is "[308,414,338,1073]", the control ID is "id:211", the text is "action:setValue", and the action is "setValue value:60%".

As an example, in step S104, the on-board controller may complete the human-machine interaction operation based on the target control instruction directly output by the multimodal recognition model.

In this embodiment, multimodal data (such as the current interaction script, the current scene image, and the current scene data that are corresponding to the same interaction time) capable of reflecting a human-machine interaction process performed by a user is first obtained, and the multimodal data may be input into a pre-trained multimodal recognition model to directly output a required target control instruction, which helps guarantee output efficiency and accuracy of the target control instruction. In addition, complex control logic such as customized templates, rules, and associations during development can be reduced, thereby improving adaptability and generalization capabilities of voice interaction.

In one embodiment, as shown in FIG. 2, step S103 (namely, perform multimodal recognition on the current interaction script, the current scene image, and the current scene data by using a multimodal recognition model to determine a target control instruction) includes the following steps.

S201: determine a multimodal fusion feature based on the current interaction script, the current scene image, and the current scene data.

S202: perform intent recognition on the multimodal fusion feature by using an intent classification model to determine the target control instruction.

As an example, the multimodal recognition model includes a feature fusion model and an intent classification model. The feature fusion model is a model used to implement feature extraction and fusion processing, and the feature fusion model may perform feature extraction and fusion on input multimodal data to output a fusion feature corresponding to the multimodal data. The intent classification model is a model used to perform intent recognition on a feature corresponding to the multimodal data to output a corresponding control instruction.

As an example, in step S201, after obtaining the multimodal data such as the current interaction script, the current scene image, and the current scene data, the on-board controller may perform feature extraction and fusion on the current interaction script, the current scene image, and the current scene data by using a pre-trained feature fusion model, so that a multimodal fusion feature reflecting a user intent may be quickly extracted. In this example, compared with a conventional approach of simply using a current interaction script for global matching of all scene data of the in-vehicle infotainment system, the approach of using the current interaction script combined with the current scene image and the current scene data for partial matching allows a multimodal fusion feature corresponding to the current interaction script to be quickly and accurately extracted.

As an example, in step S202, after obtaining the multimodal fusion feature extracted from the multimodal data such as the current interaction script, the current scene image, and the current scene data, the on-board controller may input the multimodal fusion feature into a pre-trained intent classification model for recognition to obtain a target control instruction output by the intent classification model. In this example, the intent classification model performs intent recognition on the multimodal fusion feature, determines a target intent corresponding to the current interaction script, and directly outputs a target control instruction corresponding to the target intent. Compared with a conventional approach of first outputting a target intent and then using a large quantity of rules and templates for conversion control, this approach can effectively reduce complex control logic such as customized templates, rules, and associations during development, and help improve adaptability and generalization capabilities of voice interaction.

In this embodiment, feature extraction and fusion are first performed on the multimodal data such as the current interaction script, the current scene image, and the current scene data, so that the multimodal fusion feature representing the user intent may be quickly and accurately obtained; and then, intent recognition is performed on the multimodal fusion feature by using the intent classification model to directly output the target control instruction, omitting the process of outputting a target intent and then using a large quantity of rules and templates for conversion. This approach can effectively reduce complex control logic such as customized templates, rules, and associations during development, and help improve adaptability and generalization capabilities of voice interaction.

In one embodiment, the current scene data includes current scene text and current scene code.

As shown in FIG. 3, step S201 (namely, perform feature fusion on the current interaction script, the current scene image, and the current scene data to obtain a multimodal fusion feature) includes the following steps.

S301: obtain a first fusion feature based on the current interaction script, the current scene image, and the current scene text, where the first fusion feature includes location information of a required interface operation element.

S302: obtain a second fusion feature based on the current interaction script and the current scene code, where the second fusion feature includes code information of a required interface operation element; and
the multimodal fusion feature includes the first fusion feature and the second fusion feature.

The current scene text is used to record region block information corresponding to the current interface elements displayed in the current scene image. The current interface elements herein are interface elements displayed in the current scene image, and are interface elements capable of interacting with the user during human-machine interaction. Each piece of region block information includes region block coordinates and a region block name. The region block name is a name of a region block in which a current interface element is located, as recorded in the current scene data. The region block coordinates are coordinates of a region block in which a current interface element is located, as recorded in the current scene data. For example, when the current scene image includes current interface elements corresponding to a plurality of menu areas such as "audio", "display", "system", "basic management", and "application management", current scene text extracted by using a system service interface includes region block information corresponding to the menu areas, and specifically includes region block coordinates and region block names.

The current scene code is used to record code corresponding to the current interface element displayed in the current scene image. For example, to implement multimedia brightness adjustment, in addition to displaying a current interface element for brightness adjustment on a current scene image for the user to perform a touch operation, current scene data records current scene code for achieving this function. For example, the current scene code is: position:multimedia brightness adjustment|rect[624,278,414,237]-seekBar|rect[308,414,338, 1073];type:TextView-SeekBar;slide:false-true;id:209-211.

The required interface operation element is a current interface element that needs to be operated as indicated by the current interaction script.

As an example, in step S301, after obtaining the multimodal data, the on-board controller may perform feature matching on the current interaction script, the current scene image, and the current scene text in the current scene data to determine the first fusion feature corresponding to the location information of the required interface operation element for the current interaction script, where the first fusion feature is a feature obtained after the foregoing three types of modal data are fused, and is specifically a feature formed by including region block information corresponding to the required interface operation element for the current interaction script, so as to quickly focus on and locate the required interface operation element. For example, the on-board controller may match the current interaction script with current scene text corresponding to all current interface elements displayed in the current scene image, and determine region block information of a successfully matched current interface element in the current scene image, so as to quickly aggregate the required interface operation element. The required interface operation element herein is a current interface element that needs to be operated as determined by the current interaction script, for example, a current interface element selected from the plurality of current interface elements such as "audio", "display", "system", "basic management", and "application management".

As an example, in step S302, after obtaining the multimodal data, the on-board controller may perform feature matching on the current interaction script and the current scene code in the current scene data to determine the second fusion feature corresponding to the code information of the required interface operation element for the current interaction script, where the second fusion feature is a feature obtained after the foregoing two types of modal data are fused, and is specifically a feature formed by the scene code corresponding to the required interface operation element for the current interaction script, so as to specifically determine the scene code of the current interface element, and provide a guarantee for subsequent intent recognition and directly outputting a corresponding target control instruction. For example, the current scene code records scene code of all current interface elements displayed in the current scene image, and the current interaction script may be matched with the scene code of all current interface elements, so that scene code corresponding to a required interface operation element may be quickly determined, thereby obtaining the second fusion feature corresponding to the code information of the required interface operation element.

In this embodiment, the first fusion feature corresponding to the location information of the required interface operation element for the current interaction script may be quickly determined based on the current interaction script, the current scene image, and the current scene text. Compared with a conventional approach of simply using a current interaction script for global matching of all scene data of the in-vehicle infotainment system, an amount of scene data that needs to be matched, as determined by the current scene image and the current scene text, is relatively small, so that the first fusion feature corresponding to the location information of the required interface operation element may be quickly and accurately determined. The second fusion feature corresponding to the code information of the required interface operation element for the current interaction script may be quickly determined based on the current interaction script and the current scene code. Compared with a conventional approach of simply using a current interaction script for layer-by-layer global matching of all scene code of the in-vehicle infotainment system, the second fusion feature corresponding to the code information of the required interface operation element may be quickly and accurately determined because an amount of scene code that needs to be matched, as determined by the current scene image, is relatively small.

In one embodiment, the current scene text includes region block names and region block coordinates corresponding to all current interface elements.

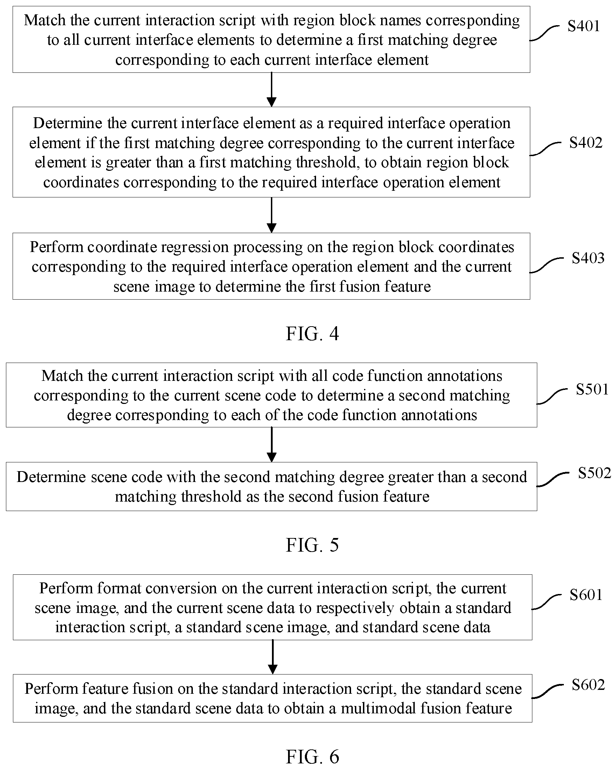

As shown in FIG. 4, step S301 (namely, obtain a first fusion feature based on the current interaction script, the current scene image, and the current scene text) includes the following steps.

S401: match the current interaction script with region block names corresponding to all current interface elements to determine a first matching degree corresponding to each current interface element.

S402: determine the current interface element as a required interface operation element if the first matching degree corresponding to the current interface element is greater than a first matching threshold, to obtain region block coordinates corresponding to the required interface operation element.

S403: perform coordinate regression processing on the region block coordinates corresponding to the required interface operation element and the current scene image to determine the first fusion feature.

The first matching degree is a matching degree between the current interaction script and a region block name. The first matching threshold is a preset first threshold used to evaluate whether a relatively high matching criterion is reached.

As an example, in step S401, the on-board controller may match the current interaction script with region block names corresponding to all current interface elements in the current scene text to determine the first matching degree corresponding to each current interface element. For example, the on-board controller may match the current interaction script with region block names corresponding to all current interface elements by using a text matching algorithm including but not limited to Jaccard similarity, Levenshtein distance, Simhash, TF-IDF, and BM25 to determine the first matching degree corresponding to each current interface element.

As an example, in step S402, after determining the first matching degree corresponding to each current interface element, the on-board controller may compare the first matching degree with the preset first matching threshold. If the first matching degree is greater than the first matching threshold, it is determined that a matching degree between the region block name of the current interface element and the current interaction script is relatively high, and the current interface element corresponding to the region block name may be determined as the required interface operation element, so as to determine the region block coordinates corresponding to the required interface operation element.

As an example, in step S403, after determining the region block coordinates corresponding to the required interface operation element, the on-board controller may perform coordinate regression processing on the region block coordinates corresponding to the required interface operation element and the current scene image by using a preset coordinate regression algorithm to obtain the first fusion feature that includes the location information of the required interface operation element.

The on-board controller may perform target detection on the current scene image and the region block coordinates corresponding to the required interface operation element by using a target detection algorithm including but not limited to faster-rcnn, retinanet, and ssd to determine a prediction box set. For example, after region block coordinates corresponding to a required interface operation element is determined, an anchor may be generated based on the region block coordinates; coordinates of the anchor are transformed into a form of a center point, a width w, and a height h; a rectangular area corresponding to the anchor is calculated by using the width w and the height h, and three first anchors are obtained based on the rectangular area and preset length-width rations; and then, all first anchors are extended by using a preset area scale to obtain an anchor set formed by nine second anchors. Then, the on-board controller may perform coordinate regression processing on the set of prediction boxes by using a clustering algorithm including but not limited to kmeans to obtain the first fusion feature that includes the location information of the required interface operation element. For example, all bboxes corresponding to the current scene image may be first extracted; the width w and the height h are selected from all bboxes; k values of w and h are randomly selected from the nine second anchors as initial values; nine iou values corresponding to each bbox and the nine second anchors are calculated; and a second anchor corresponding to a minimum value among the nine iou values is determined as a target anchor corresponding to the bbox, the bbox is assigned to a cluster where the corresponding target anchor is located, and the foregoing steps are repeated until classification clusters of updated anchors do not change, and a coordinate regression operation is completed, so that the finally determined second fusion feature can accurately locate, in the current scene image, a target prediction box corresponding to the required interface operation element, and location information corresponding to the target prediction box is determined as the first fusion feature.

In this embodiment, the current interaction script is first matched with the region block names of all current interface elements corresponding to the current scene image to determine a required interface operation element with a high matching degree. Because the quantity of current interface elements displayed in the current scene image is limited, the matching process is faster, which helps improve efficiency of determining the required interface operation element. Coordinate regression processing is performed by using the region block coordinates corresponding to the required interface operation element and the current scene image, so that efficiency of obtaining the first fusion feature including the location information of the required interface operation element may be guaranteed, and overall processing efficiency and localization accuracy may be improved.

In one embodiment, the current scene code includes code function annotations corresponding to all current interface elements and scene code corresponding to the code function annotations.

As shown in FIG. 5, step S302 (namely, determine a second fusion feature based on the current interaction script and the current scene code) includes the following steps.

S501: match the current interaction script with all code function annotations corresponding to the current scene code to determine a second matching degree corresponding to each of the code function annotations.

S502: determine scene code with the second matching degree greater than a second matching threshold as the second fusion feature.

The code function annotation is text content that describes functions of code content in a natural language. The scene code is code content used to implement a scene function. The first matching degree is a matching degree between the current interaction script and the code function annotation. The second matching threshold is a preset second threshold used to evaluate whether a relatively high matching criterion is reached.

As an example, in step S501, the on-board controller may match the current interaction script with all code function annotations in the current scene code to determine the first matching degree corresponding to each of the code function annotations. For example, the on-board controller may match the current interaction script with all code function annotations by using a text matching algorithm including but not limited to Jaccard similarity, Levenshtein distance, Simhash, TF-IDF, and BM25 to determine the second matching degree corresponding to each of the code function annotations.

As an example, in step S502, after determining the second matching degree corresponding to each of the code function annotations, the on-board controller may compare the second matching degree with the preset second matching threshold. If the second matching degree is greater than the second matching threshold, it is determined that a matching degree between the code function annotation and the current interaction script is relatively high, and scene code corresponding to the code function annotation may be determined as code information corresponding to the required interface operation element to obtain the second fusion feature.

For example, the current scene code includes a code block 1 and a code block 2, the code block 1 is "position:multimedia brightness adjustment|rect[624,278,414,237]-seekBar|rect[308,414,338,1073];type:TextView-SeekBar;slide:false-true;id:209-211", and the code block 2 is "position:multimedia screensaver|rect[428,414,469,564]-clock 1|rect[496,580,550,743];type:TextView-RadioButton;click:false-true;id:215-216". When the current interaction script is "adjust multimedia brightness to 60%", the current interaction script may be matched with code function annotations such as "multimedia brightness adjustment" and "multimedia screensaver" to determine a second matching degree A corresponding to "multimedia brightness adjustment" and a second matching degree B corresponding to "multimedia screensaver". The second matching degree A and the second matching degree B are respectively compared with a second matching threshold S. If A>S and B<S, a code block 1 corresponding to the second matching degree A may be determined as the code information corresponding to the required interface operation element, and determined as the second fusion feature.

In this embodiment, the current interaction script is first matched with the code function annotations in the current scene code to determine scene code corresponding to a code function annotation having a relatively high matching degree, and the scene code is determined as code information corresponding to the required interface operation element, so as to obtain the second fusion feature. Because the quantity of current interface elements displayed in the current scene image is limited, the matching process is faster, which helps improve efficiency of determining the required interface operation element, thereby guaranteeing efficiency of obtaining the second fusion feature for code information of the required interface operation element, and improving overall processing efficiency.

In one embodiment, as shown in FIG. 6, step S201 (namely, perform feature fusion on the current interaction script, the current scene image, and the current scene data to obtain a multimodal fusion feature) includes the following steps.

S601: perform format conversion on the current interaction script, the current scene image, and the current scene data to respectively obtain a standard interaction script, a standard scene image, and standard scene data.

S602: perform feature fusion on the standard interaction script, the standard scene image, and the standard scene data to obtain a multimodal fusion feature.

The standard interaction script is a script determined after format conversion of the current interaction script. The standard scene image is a scene image determined after format conversion of the current scene image. For example, the standard scene image may be a scene image in an RGB format. The standard scene data is scene data determined after format conversion of the current scene data.

As an example, in S601, after obtaining the multimodal data, the on-board controller may respectively perform format conversion on the current interaction script, the current scene image, and the current scene data by using preset format conversion logic to obtain the standard interaction script, the standard scene image, and the standard scene data in standard formats, so that the multimodal data obtained after format conversion and data used during training of the multimodal recognition model have a same format.

As an example, in step S602, after obtaining the multimodal data in a standard format, such as the standard interaction script, the standard scene image, and the standard scene data, the on-board controller may input the multimodal data in the standard format into a pre-trained multimodal recognition model for multimodal recognition to determine a target control instruction. In this example, the multimodal data in the standard format is recognized by using the multimodal recognition model, which helps guarantee efficiency and accuracy of an output target control instruction.

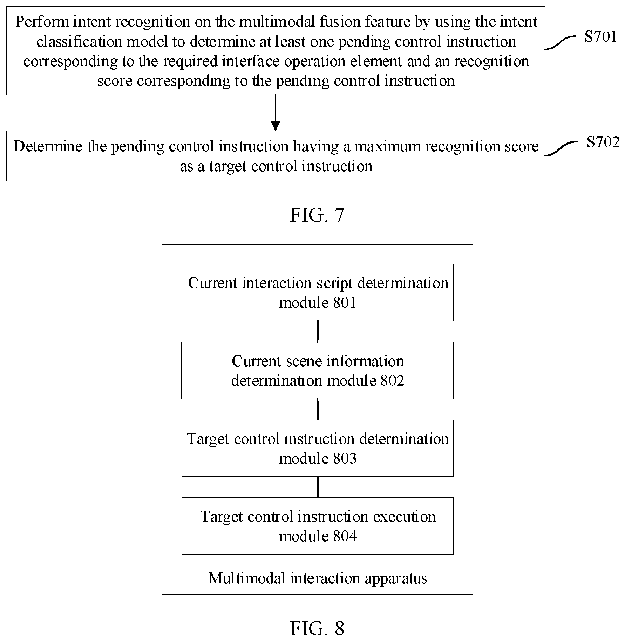

In one embodiment, as shown in FIG. 7, step S202 (namely, perform intent recognition on the multimodal fusion feature by using an intent classification model to determine the target control instruction) includes the following steps.

S701: perform intent recognition on the multimodal fusion feature by using the intent classification model to determine at least one pending control instruction corresponding to the required interface operation element and a recognition score corresponding to the pending control instruction.

S702: determine the pending control instruction having a maximum recognition score as a target control instruction.

The pending control instruction is a control instruction determined by performing intent classification on the multimodal fusion feature by using the intent classification model. The target control instruction is a control instruction having a maximum recognition score among all pending control instructions.

As an example, in step S701, the on-board controller performs, by using the intent classification model, intent recognition on the multimodal fusion feature formed by fusion of the current interaction script, the current scene image, and the current scene data, so that the at least one pending control instruction corresponding to the required interface operation element displayed in the current scene image may be determined, and a recognition score corresponding to each pending control instruction may be determined. The recognition score will be understood as a probability that the pending control instruction is an actual control instruction corresponding to the current interaction script.

As an example, in step S702, after determining the recognition score corresponding to the at least one pending control instruction, the on-board controller may compare the at least one recognition score to determine the pending control instruction having the maximum recognition score as the target control instruction.

In this embodiment, the multimodal fusion feature is first recognized by using the intent classification model to determine the pending control instruction corresponding to each interface element in the current interaction interface and the recognition score therefor, and the pending control instruction having the maximum recognition score is determined as the target control instruction corresponding to the current interaction script. Because a quantity of current interface elements in the current scene image is limited, recognized pending control instructions are highly targeted, which helps guarantee efficiency and accuracy of a finally output target control instruction.

Compared with the conventional technology in which a process of using interaction scripts to globally match text content of all scene data in an in-vehicle infotainment system, and then determining a control instruction based on the text content, has problems of low efficiency and low accuracy. In this solution, an interaction script, a scene image, and scene data may be fused to achieve an effect similar to coordinated cooperation of the mouth and eyes. Beneficial effects are as follows: First, in this solution, a user intent will be better understood, and a required interface operation element may be directly targeted, which helps guarantee processing efficiency and accuracy. Second, in this solution, the multimodal recognition model directly outputs a target control instruction corresponding to a target intent. Compared with a conventional approach of converting a target intent by using a large quantity of rules and templates to determine a final target control instruction, the processing process in this solution is more precise, so as to improve a processing effect. In addition, complex control logic such as customized templates, rules, and associations during development can be reduced, thereby improving adaptability and generalization capabilities of voice interaction. Third, because the multimodal recognition model is a model formed through pre-training, and has a generalization capability, the multimodal recognition model may be used for a current scene image and current scene data that have a correspondence. Compared with the conventional technology in which rules and templates need to be customized again after an interface changes due to a system change, third-party incompatibility, or a change in system components, this solution has better universality, and can still be directly used after upgrade and changes of an in-vehicle infotainment system, which greatly lowers product development and operation costs. In addition, this solution is not affected by a system model, and theoretically can be used in Linux, Android, and IOS.

It will be understood that sequence numbers of the steps in the foregoing embodiments do not mean an execution sequence. The execution sequence of the processes will be determined based on functions and internal logic of the processes, and will not constitute any limitation on the implementation processes of the embodiments of this application.

In one embodiment, a multimodal interaction apparatus is provided. The multimodal interaction apparatus is in a one-to-one correspondence with the multimodal interaction method in the foregoing embodiments. As shown in FIG. 8, the multimodal interaction apparatus includes a current interaction script determination module 801, a current scene information determination module 802, a target control instruction determination module 803, and a target control instruction execution module 804. Detailed descriptions of each functional module are as follows:
the current interaction script determination module 801 is configured to determine a current interaction script based on a current interaction voice at interaction time;
the current scene information determination module 802 is configured to determine, based on a current interaction interface corresponding to the interaction time, a current scene image and current scene data that are corresponding to the current interaction interface;
the target control instruction determination module 803 is configured to perform multimodal recognition on the current interaction script, the current scene image, and the current scene data by using a multimodal recognition model to determine a target control instruction; and
the target control instruction execution module 804 is configured to execute the target control instruction to complete a human-machine interaction operation.

In one embodiment, the target control instruction determination module 803 includes:
a multimodal fusion feature determination submodule, configured to determine a multimodal fusion feature based on the current interaction script, the current scene image, and the current scene data; and
a target control instruction determination submodule, configured to perform intent recognition on the multimodal fusion feature by using an intent classification model to determine the target control instruction.

In one embodiment, the current scene data includes current scene text and current scene code;
the multimodal fusion feature determination submodule includes:
a first fusion feature determination unit, configured to obtain a first fusion feature based on the current interaction script, the current scene image, and the current scene text, where the first fusion feature includes location information of a required interface operation element; and
a second fusion feature determination unit, configured to obtain a second fusion feature based on the current interaction script and the current scene code, where the second fusion feature includes code information of a required interface operation element; and
the multimodal fusion feature includes the first fusion feature and the second fusion feature.

In one embodiment, the current scene text includes region block names and region block coordinates corresponding to all current interface elements;
the first fusion feature determination unit includes:
a first matching degree determination subunit, configured to match the current interaction script with region block names corresponding to all current interface elements to determine a first matching degree corresponding to each current interface element;
a region block coordinate determination subunit, configured to determine the current interface element as a required interface operation element if the first matching degree corresponding to the current interface element is greater than a first matching threshold, to obtain region block coordinates corresponding to the required interface operation element; and
a coordinate regression processing subunit, configured to perform coordinate regression processing on the region block coordinates corresponding to the required interface operation element and the current scene image to determine the first fusion feature.

In one embodiment, the current scene code includes code function annotations corresponding to all current interface elements and scene code corresponding to the code function annotations;
the second fusion feature determination unit includes:
a second matching degree determination subunit, configured to match the current interaction script with all code function annotations corresponding to the current scene code to determine a second matching degree corresponding to each of the code function annotations; and
a second fusion feature determination subunit, configured to determine scene code with the second matching degree greater than a second matching threshold as the second fusion feature.

In one embodiment, the target control instruction determination submodule includes:
a pending control instruction determination unit, configured to perform intent recognition on the multimodal fusion feature by using the intent classification model to determine at least one pending control instruction corresponding to the required interface operation element and a recognition score corresponding to the pending control instruction; and
a target control instruction determination unit, configured to determine the pending control instruction having a maximum recognition score as a target control instruction.

In one embodiment, the multimodal fusion feature determination submodule includes:
a format conversion unit, configured to perform format conversion on the current interaction script, the current scene image, and the current scene data to respectively obtain a standard interaction script, a standard scene image, and standard scene data; and
a feature fusion unit, configured to perform feature fusion on the standard interaction script, the standard scene image, and the standard scene data to obtain a multimodal fusion feature.

For specific limitation on the multimodal interaction apparatus, reference may be made to the foregoing limitation on the multimodal interaction method. Details are not described herein again. All or some of the modules in the multimodal interaction apparatus may be implemented by using software, hardware, or a combination thereof. The foregoing modules may be embedded in or independent of a processor in a computer device in a form of hardware, or may be stored in a memory in the computer device in a form of software, so that the processor invokes and performs operations corresponding to the modules.

In one embodiment, an on-board controller is provided. The on-board controller includes a memory, a processor, and computer-readable instructions stored in the memory and capable of running on the processor, where when the processor executes the computer-readable instructions, the multimodal interaction method in the foregoing embodiments is implemented, such as S101 to S103 shown in FIG. 1, or shown in FIG. 2 to FIG. 7. For brevity, details are not described herein again. Alternatively, when the computer-readable instructions are executed by the processor, functions of the modules/units in the foregoing multimodal interaction apparatus embodiment are implemented, such as functions of the current interaction script determination module 801, the current scene information determination module 802, the target control instruction determination module 803, and the target control instruction execution module 804 shown in FIG. 8. For brevity, details are not described herein again.

An in-vehicle infotainment system, including the on-board controller, a voice acquisition device connected to the on-board controller, and a display, where the voice acquisition device is configured to send a current interaction voice acquired to the on-board controller, and the display is configured to display a current scene image. In this example, the voice acquisition device acquires the current interaction voice in real time and sends the current interaction voice to the on-board controller. After receiving the current interaction voice, the on-board controller may obtain and read, by using a preset interface, the current scene image and current scene data currently displayed on the display. The current interaction script, the current scene image, and the current scene data that are corresponding to the current interaction voice may be recognized by using a multimodal recognition model to directly output a target control instruction, so that a human-machine interaction operation may be performed based on the target control instruction, which helps guarantee output efficiency and accuracy of the target control instruction. In addition, complex control logic such as customized templates, rules, and associations during development can be reduced, thereby improving adaptability and generalization capabilities of voice interaction.

An automobile, including the in-vehicle infotainment system.

A computer-readable storage medium, where the computer-readable storage medium stores computer-readable instructions, and when the computer-readable instructions are executed by a processor, the multimodal interaction method is implemented.

In one embodiment, a computer-readable storage medium is provided. The computer-readable storage medium stores computer-readable instructions. When the computer-readable instructions are executed by a processor, the multimodal interaction method in the foregoing embodiments is implemented, such as S101 to S103 shown in FIG. 1, or shown in FIG. 2 to FIG. 7. For brevity, details are not described herein again. Alternatively, when the computer-readable instructions are executed by the processor, functions of the modules/units in the foregoing multimodal interaction apparatus embodiment are implemented, such as functions of the current interaction script determination module 801, the current scene information determination module 802, the target control instruction determination module 803, and the target control instruction execution module 804 shown in FIG. 8. For brevity, details are not described herein again.

A person of ordinary skill in the art may understand that all or some of the processes of the methods in the foregoing embodiments may be implemented by computer-readable instructions instructing related hardware. The computer-readable instructions may be stored in a non-volatile computer-readable storage medium. When the computer-readable instructions are executed, the processes in the foregoing method embodiments may be included. Any references to a memory, storage, a database or another medium used in the embodiments provided in this application may include a non-volatile memory and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of illustration rather than limitation, the RAM is available in various forms, such as a static RAM (SRAM), a dynamic RAM (DRAM), a synchronous DRAM (SDRAM), a double data rate SDRAM (DDRSDRAM), an enhanced SDRAM (ESDRAM), a synchronous link (Synchlink) DRAM (SLDRAM), a memory bus (Rambus) direct RAM (RDRAM), a direct memory bus dynamic RAM (DRDRAM), and a memory bus dynamic RAM (RDRAM).

It will be clearly understood by a person skilled in the art that, for ease and brevity of description, division of the foregoing functional units and modules is merely used as an example for description. In an actual application, the foregoing functions may be allocated to different functional units and modules based on a requirement, that is, an internal structure of the apparatus is divided into different functional units or modules, to complete all or some of the functions described above.

The foregoing embodiments are merely intended to describe the technical solutions of this application, but are not to limit this application. Although this application is described in detail with reference to the foregoing embodiments, it will be understood by a person of ordinary skill in the art that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A multimodal interaction method, comprising:
determining a current interaction script based on a current interaction voice at interaction time;
determining, based on a current interaction interface corresponding to the interaction time, a current scene image and current scene data that are corresponding to the current interaction interface;
performing multimodal recognition on the current interaction script, the current scene image, and the current scene data by using a multimodal recognition model to determine a target control instruction; and
executing the target control instruction to complete a human-machine interaction operation.

2. The multimodal interaction method according to claim 1, wherein performing multimodal recognition on the current interaction script, the current scene image, and the current scene data by using the multimodal recognition model to determine the target control instruction comprises:
determining a multimodal fusion feature based on the current interaction script, the current scene image, and the current scene data; and
performing intent recognition on the multimodal fusion feature by using an intent classification model to determine the target control instruction.

3. The multimodal interaction method according to claim 2, wherein the current scene data comprises current scene text and current scene code;
performing feature fusion on the current interaction script, the current scene image, and the current scene data to obtain the multimodal fusion feature comprises:
obtaining a first fusion feature based on the current interaction script, the current scene image, and the current scene text, wherein the first fusion feature comprises location information of a required interface operation element; and
obtaining a second fusion feature based on the current interaction script and the current scene code, wherein the second fusion feature comprises code information of a required interface operation element; and
the multimodal fusion feature comprises the first fusion feature and the second fusion feature.

4. The multimodal interaction method according to claim 3, wherein the current scene text comprises region block names and region block coordinates corresponding to all current interface elements;
obtaining the first fusion feature based on the current interaction script, the current scene image, and the current scene text comprises:
matching the current interaction script with region block names corresponding to all current interface elements to determine a first matching degree corresponding to each current interface element;
determining the current interface element as a required interface operation element if the first matching degree corresponding to the current interface element is greater than a first matching threshold, to obtain region block coordinates corresponding to the required interface operation element; and
performing coordinate regression processing on the region block coordinates corresponding to the required interface operation element and the current scene image to determine the first fusion feature.

5. The multimodal interaction method according to claim 3, wherein the current scene code comprises code function annotations corresponding to all current interface elements and scene code corresponding to the code function annotations;
determining the second fusion feature based on the current interaction script and the current scene code comprises:
matching the current interaction script with all code function annotations corresponding to the current scene code to determine a second matching degree corresponding to each of the code function annotations; and
determining scene code with the second matching degree greater than a second matching threshold as the second fusion feature.

6. The multimodal interaction method according to claim 3, wherein performing intent recognition on the multimodal fusion feature by using the intent classification model to determine the target control instruction comprises:
performing intent recognition on the multimodal fusion feature by using the intent classification model to determine at least one pending control instruction corresponding to the required interface operation element and a recognition score corresponding to the pending control instruction; and
determining the pending control instruction having a maximum recognition score as a target control instruction.

7. The multimodal interaction method according to claim 2, wherein performing feature fusion on the current interaction script, the current scene image, and the current scene data to obtain the multimodal fusion feature comprises:
performing format conversion on the current interaction script, the current scene image, and the current scene data to respectively obtain a standard interaction script, a standard scene image, and standard scene data; and
performing feature fusion on the standard interaction script, the standard scene image, and the standard scene data to obtain a multimodal fusion feature.

8. A multimodal interaction apparatus, comprising:
a current interaction script determination module, configured to determine a current interaction script based on a current interaction voice at interaction time;
a current scene information determination module, configured to determine, based on a current interaction interface corresponding to the interaction time, a current scene image and current scene data that are corresponding to the current interaction interface;
a target control instruction determination module, configured to perform multimodal recognition on the current interaction script, the current scene image, and the current scene data by using a multimodal recognition model to determine a target control instruction; and
a target control instruction execution module, configured to execute the target control instruction to complete a human-machine interaction operation.

9. The multimodal interaction apparatus according to claim 8, wherein the target control instruction determination module comprises:
a multimodal fusion feature determination submodule, configured to determine a multimodal fusion feature based on the current interaction script, the current scene image, and the current scene data; and
a target control instruction determination submodule, configured to perform intent recognition on the multimodal fusion feature by using an intent classification model to determine the target control instruction.

10. The multimodal interaction apparatus according to claim 9, wherein the current scene data comprises current scene text and current scene code;
the multimodal fusion feature determination submodule comprises:
a first fusion feature determination unit, configured to obtain a first fusion feature based on the current interaction script, the current scene image, and the current scene text, wherein the first fusion feature comprises location information of a required interface operation element; and
a second fusion feature determination unit, configured to obtain a second fusion feature based on the current interaction script and the current scene code, wherein the second fusion feature comprises code information of a required interface operation element; and
the multimodal fusion feature comprises the first fusion feature and the second fusion feature.

11. The multimodal interaction apparatus according to claim 10, wherein the current scene text comprises region block names and region block coordinates corresponding to all current interface elements;
the first fusion feature determination unit comprises:
a first matching degree determination subunit, configured to match the current interaction script with region block names corresponding to all current interface elements to determine a first matching degree corresponding to each current interface element;
a region block coordinate determination subunit, configured to determine the current interface element as a required interface operation element if the first matching degree corresponding to the current interface element is greater than a first matching threshold, to obtain region block coordinates corresponding to the required interface operation element; and
a coordinate regression processing subunit, configured to perform coordinate regression processing on the region block coordinates corresponding to the required interface operation element and the current scene image to determine the first fusion feature.

12. The multimodal interaction apparatus according to claim 9, wherein the current scene code comprises code function annotations corresponding to all current interface elements and scene code corresponding to the code function annotations;
the second fusion feature determination unit comprises:
a second matching degree determination subunit, configured to match the current interaction script with all code function annotations corresponding to the current scene code to determine a second matching degree corresponding to each of the code function annotations; and
a second fusion feature determination subunit, configured to determine scene code with the second matching degree greater than a second matching threshold as the second fusion feature.

13. The multimodal interaction apparatus according to claim 10, wherein the target control instruction determination submodule comprises:
a pending control instruction determination unit, configured to perform intent recognition on the multimodal fusion feature by using the intent classification model to determine at least one pending control instruction corresponding to the required interface operation element and a recognition score corresponding to the pending control instruction; and
a target control instruction determination unit, configured to determine the pending control instruction having a maximum recognition score as a target control instruction.

14. The multimodal interaction apparatus according to claim 9, wherein the multimodal fusion feature determination submodule comprises:
a format conversion unit, configured to perform format conversion on the current interaction script, the current scene image, and the current scene data to respectively obtain a standard interaction script, a standard scene image, and standard scene data; and
a feature fusion unit, configured to perform feature fusion on the standard interaction script, the standard scene image, and the standard scene data to obtain a multimodal fusion feature.

15. An on-board controller, comprising a memory, a processor, and computer-readable instructions stored in the memory and capable of running on the processor, wherein when the processor executes the computer-readable instructions, the multimodal interaction method according to any one of claims 1 to 7 is implemented.

16. An in-vehicle infotainment system, comprising the on-board controller according to claim 15, a voice acquisition device connected to the on-board controller, and a display, wherein the voice acquisition device is configured to send a current interaction voice acquired to the on-board controller, and the display is configured to display a current scene image.

17. An automobile, comprising the in-vehicle infotainment system according to claim 16.

18. A computer-readable storage medium, wherein the computer-readable storage medium stores computer-readable instructions, and when the computer-readable instructions are executed by a processor, the multimodal interaction method according to any one of claims 1 to 7 is implemented.
